# FASCICULE DE BREVET EUROPEEN

(11) **EP 0 762 729 B1**
(45) Date de publication et mention de la délivrance du brevet: **19.04.2000**
(21) Numéro de dépôt: 96401911.1
(22) Date de dépôt: 06.09.1996
(51) Int. Cl.: H04N 1/327

(54) **Procédé de gestion d'une communication entre un serveur de documents de télécopie et un télécopieur associé à un poste téléphonique**
Verfahren zur Verwaltung einer Übertragung zwischen einen Faksimiledokumentenserver sowie Faksimilegerät mit Telefonendgerät
Method for managing a communication between a facsimile document server and a facsimile device connected to a telephone receiver

(30) Priorité: 07.09.1995 FR 9510471
(43) Date de publication de la demande: 12.03.1997
(73) Titulaire: SAGEM SA, 75783 Paris Cédex 16 (FR)
(72) Inventeur: Charbonnier, Philippe, 78600 Le Mesnil Le Roi (FR); De Chevron-Villette, Hubert, 92400 Courbevoie (FR)
(74) Mandataire: Bloch, Gérard

(56) Documents cités:
- EP-A- 0 483 813
- FR-A- 2 662 561
- US-A- 5 072 309
- US-A- 5 131 031

## Description

La présente invention concerne un procédé de gestion d'une communication entre un serveur de documents de télécopie et un télécopieur associé à un poste téléphonique.

Un serveur de documents de télécopie comporte une banque de documents à laquelle les télécopieurs peuvent accéder en lecture par une ligne téléphonique. Afin de permettre la sélection des documents, le serveur présente préalablement un menu des documents et un opérateur du télécopieur envoie une adresse de sélection, voir par exemple US-A-5 072 309 qui divulgue un menu des documents sous forme de télécopie.

Pour faciliter ces échanges préalables, ceux-ci sont effectués par des signaux phoniques. Le serveur synthétise un menu vocal, reçu par l'opérateur sur un poste téléphonique partageant la ligne avec le télécopieur et ayant servi à établir la communication téléphonique, et l'opérateur y répond par ce même poste, par commande vocale ou par envoi de signaux multifréquence, avant de basculer la ligne sur le télécopieur.

En fin de réception du document sélectionné, il se peut que l'opérateur souhaite enchaîner avec la réception d'un autre document, sans couper la communication. Pour la réception du menu vocal qui va à nouveau être présenté, le télécopieur bascule alors la ligne vers le poste téléphonique, mais encore faut-il que celui-ci soit décroché, sinon la communication est coupée.

Pour éviter cette coupure, le télécopieur émet, préalablement à un signal acquittant le document reçu et, au basculement de la ligne, une alarme locale visuelle ou sonore d'invitation à décrocher le poste et l'opérateur confirme, par actionnement d'une touche du télécopieur, que le poste est effectivement décroché. Cette phase d'enchaînement nécessite une réaction pertinente et rapide de l'opérateur, faute de quoi la communication est coupée. Or l'opérateur peut être absorbé par l'examen du document reçu ou il peut mal connaître la manoeuvre à effectuer et tarder à la réaliser, ou mal la faire, par exemple actionner la touche sans avoir décroché le combiné du poste téléphonique.

La présente invention vise à simplifier la tâche de l'opérateur.

A cet effet, l'invention concerne un procédé de gestion d'une communication entre un serveur de télécopie et un télécopieur associé à un poste téléphonique, reliés par une ligne téléphonique, dans lequel le serveur, mis en communication avec le poste par un opérateur, présente un menu vocal de documents, l'opérateur sélectionne l'un des documents au moyen du poste avant de commuter la ligne sur le télécopieur et, en fin de message, le serveur émet un signal de fin de document, procédé caractérisé par le fait qu'on mémorise dans le serveur une commande d'enchaînement de documents, le télécopieur acquitte le signal de fin de document, quel que soit l'état du poste, et maintient établie la communication par raccordement de la ligne à une impédance de bouclage, afin de recevoir à nouveau un menu vocal.

Ainsi, la communication reste établie et l'opérateur dispose du temps nécessaire pour décrocher le poste s'il le souhaite.

De préférence, le bouclage de ligne est effectué sur un transducteur électro-acoustique, ce qui permet de recevoir le menu vocal sans aucune intervention de l'opérateur.

L'invention sera mieux comprise à l'aide de la description suivante d'un serveur de télécopie et d'un télécopieur mettant en oeuvre deux variantes du procédé de l'invention en référence au dessin annexé, sur lequel :

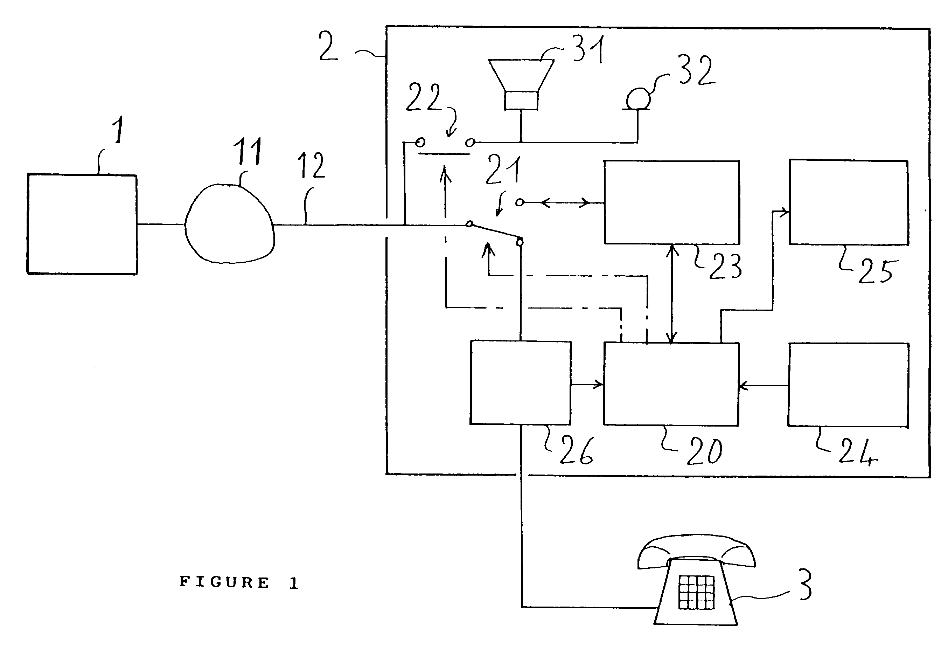

- la figure 1 est une représentation schématique du serveur et du télécopieur, avec un poste téléphonique associé ;
- la figure 2 est un organigramme illustrant la séquence des échanges entre le serveur et le télécopieur ou le poste selon la première variante et,
- la figure 3 est un organigramme du même genre, concernant la seconde variante.

Le serveur 1 de documents de télécopie représenté est relié, à travers le réseau téléphonique commuté (RTC) 11, à un télécopieur 2 associé à un poste téléphonique 3, ici multifréquence. Plus précisément, la ligne 12 de raccordement de ces derniers au réseau RTC 11 aboutit à une borne de contact d'un relais d'aiguillage 21 du télécopieur 2, permettant de relier la ligne 12 au modem 23 du télécopieur 2 ou bien au poste 3. On comprendra qu'il s'agit d'une représentation, unifilaire, très schématique et qu'en pratique le modem 23 et le poste 3 peuvent être simultanément isolés de la ligne 12, chacun par un relais interrupteur à deux lames.

Un relais interrupteur 22 du télécopieur 2 permet aussi de raccorder la ligne 12 à un circuit de réception téléphonique amplifiée, symbolisé par un haut-parleur 31, et éventuellement à un circuit d'émission téléphonique symbolisé par un microphone 32, l'ensemble 31-32 formant un ensemble téléphonique "mains-libres" intégré au télécopieur 2. Un détecteur de courant continu 26 est monté dans le télécopieur 2, en série sur la liaison avec le poste 3. Un clavier 24 et un afficheur 25 de richesse variable selon les fonctionnalités du télécopieur 2 permettent à un opérateur de dialoguer avec celui-ci. Une unité centrale 20 du télécopieur 2 commande les éléments 21-22 et 25 et est commandée par le clavier 24 et le détecteur 26. Le modem 23 est relié par une liaison bidirectionnelle à l'unité centrale 20.

On aurait pu prévoir une structure de téléphone-télécopieur qui soit intégrée. L'unité centrale 20 et le clavier 24 géreraient alors les fonctions télécopie et téléphonie, la numérotation ayant lieu via le modem 23, la conversation via les tranducteurs 31, 32 montés en combiné ou en main libre ou les deux. Il n'y aurait plus de poste externe 3 ni de détecteur de courant 26, l'unité centrale ayant la maîtrise du bouclage sur la partie téléphone ou sur la partie fax.

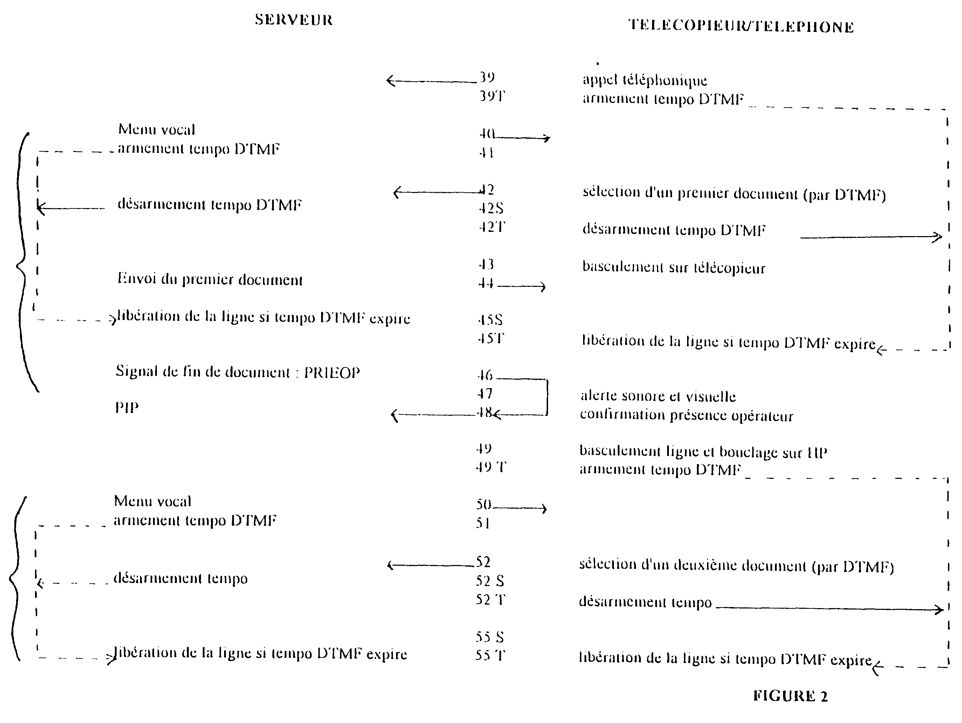

La première variante du procédé de l'invention va maintenant être exposée, en référence à la figure 2.

De façon liminaire, on rappellera que les échanges de documents de télécopie sont normalisés et régis par le protocole T30 du CCITT, incorporé ici par référence.

Les échanges de signalisations à travers le réseau RTC 11 sont les suivants.

A une étape 39, l'opérateur décroche le poste 3, alimenté par la ligne 12 à travers le contact repos du relais 21, et compose le numéro d'appel du serveur 1. Le serveur 1 "décroche" et répond par un menu vocal synthétisé (étape 40), ou une sucession de menus vocaux, invitant l'opérateur à envoyer, (étape 42) par signalisation DTMF, les caractéristiques de la transaction : éventuelle identification pour contrôle du droit d'accès, désignation du document souhaité.

Les étapes liées à une fonction chien de garde 39T, 41, 42S, 42T, 45S et 45T sont semblables aux étapes portant le même numéro d'unité associé au numéro de la dizaine supérieure, relatives à l'envoi d'un deuxième document, qui seront décrites plus loin.

L'étape 42 se poursuit avec l'envoi, par l'opérateur, de signalisations DTMF de sélection d'un premier des documents énumérés par le serveur 1. L'opérateur commande ensuite, à une étape 43, le basculement ou commutation de la ligne 12 sur le télécopieur 2, par action sur une touche du clavier 24, commandant ainsi le relais 21 à travers l'unité centrale 20.

A une étape 44, le serveur 1 envoie le document sélectionné, qui est reçu par le modem 23 et mémorisé ou imprimé, puis, à une étape 46, le serveur 1 émet une signalisation PRIEOP indiquant la fin de la transmission du document et proposant d'envoyer à nouveau le menu vocal, pour la sélection d'un deuxième document.

A réception de la signalisation PRIEOP, l'unité centrale 20 émet (étape 47) une signalisation destinée à l'opérateur. Il s'agit ici d'une alerte sonore produite au moyen du haut-parleur 31, sous la commande d'un circuit de tonalité et à travers un circuit de connexion non représentés, et d'un message affiché sur l'afficheur 25, invitant à décrocher le poste 3.

A une étape 48, le télécopieur 2 acquitte le signal de fin de document PRIEOP en répondant positivement (PIP) à la proposition de l'étape 46 et ceci de façon inconditionnelle, c'est-à-dire quel que soit l'état, raccroché ou décroché, du poste 3. Quasi-simultanément, l'unité centrale 20 commande à un étape 49, le basculement du relais 21 en position repos, vers le poste 3, et la fermeture du relais interrupteur 22. Cela assure le bouclage en courant continu de la ligne 12 par au moins le haut-parleur 31 et maintient donc établie la liaison téléphonique avec le serveur 1. Comme ici l'état du poste est surveillé par le détecteur 26, la fermeture du contact 22 est superflue lorsque le poste 3 est décroché.

On comprendra que si, dans cet exemple, c'est le haut-parleur 31 qui est utilisé comme élément de bouclage de ligne passant le continu, cette fonction aurait aussi pu être assurée par d'autres éléments, tels que des résistances série et/ou parallèle, limitant par exemple le courant qui le traverse et assurant le passage d'au moins le courant continu minimal nécessaire au maintien à l'état actif de la liaison téléphonique 12 par le central téléphonique du réseau RTC 11.

A une étape 49T intervient, quasi-simultanément avec l'étape 49, l'armement d'une temporisation "chien de garde" portant sur la détection, en fait la non-détection, de signalisation DTMF sur la ligne 12. Cette détection est effectuée par un dispositif d'écoute à haute impédance d'entrée, non représenté, commandant l'unité centrale 20.

Le serveur 1 présente alors, à une étape 50, la partie du menu vocal énumérant les documents proposés et il arme en même temps (étape 51) une temporisation homologue de celle de l'étape 49T (DTMF). A une étape 52, semblable à l'étape 42, l'opérateur sélectionne un deuxième document, par envoi de signalisation DTMF à partir du poste 3, ce qui a pour effet, à des étapes respectives 52T et 52S, de désarmer respectivement les deux temporisations des étapes 49T et 51.

En l'absence d'étape 52, c'est-à-dire d'envoi de signalisations DTMF, traduisant la présence de l'opérateur au moyen du poste 3 décroché, les temporisations des étapes 49 et 51 continuent à progresser et la première arrivant à terme joue son rôle de "chien de garde" et commande la libération de la ligne 12, à des étapes respectives 55T et 55S.

Dans cet exemple, le haut-parleur 31 et le microphone 32 peuvent se substituer entièrement au poste 3, c'est-à-dire que l'unité centrale 20 peut "décrocher" et raccrocher cet ensemble mains-libres en temps opportun en fonction des signalisations échangées en ligne, ce qui évite toute intervention de l'opérateur, hormis la sélection des documents. En l'absence de sélection spécifique, c'est-à-dire en cas de lecture de tous les documents, ou en cas de sélection selon les critères déterminés, le télécopieur 2 peut assurer lui-même la totalité des opérations.

Sinon, le télécopieur 2 surveille, au moyen du détecteur 26, l'état du poste 3 pour boucler la ligne 12 sur celui-ci lorsqu'il est décroché après réception d'un document. Le bouclage initial sur l'impédance de bouclage, ici le haut-parleur 31, peut ou non être maintenu.

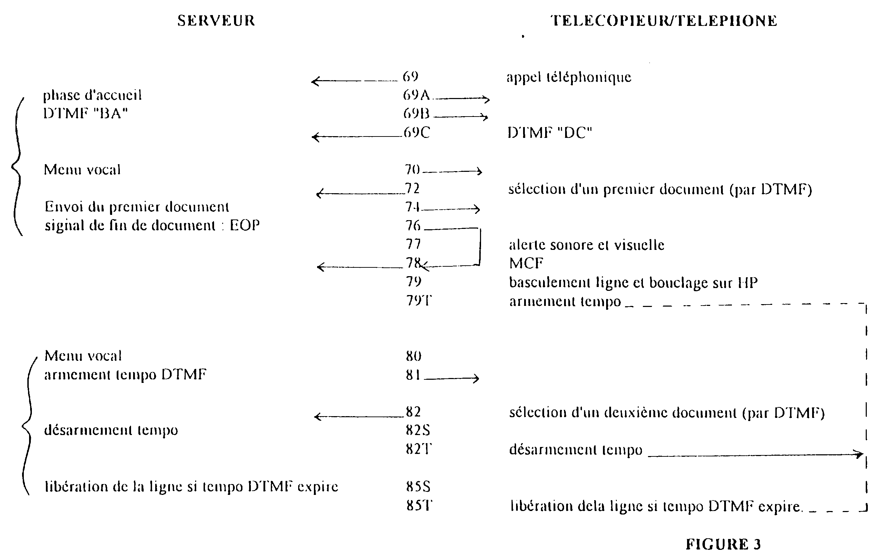

La figure 3 illustre la seconde variante de mise en oeuvre du procédé.

Cette variante diffère essentiellement de l'exemple précédent par le fait que le serveur n'est pas apte à fournir le signal PRIEOP en fin de transmission du document mais le seul signal EOP, indiquant, selon le protocole T30, une fin de phase télécopie suivie d'une libération, donc sans retour en vocal. Le signal PRIEOP est en effet optionnel dans le protocole T30, alors que le signal EOP est obligatoire, donc nécessairement réalisé dans le serveur.

Pour tourner cette difficulté et éviter la rupture de la communication téléphonique, le serveur est programmé pour effectuer avec le télécopieur un échange préalable de signalisations, ou négociation, par lequel ils conviennent de ne pas libérer après le signal EOP.

Ainsi, dans cette seconde variante, le signal EOP et le signal d'acquittement pour libérer la ligne (MCF) sont interprétés comme étant respectivement le signal PRIEOP et le signal d'acquittement (de l'étape 48) confirmant la présence de l'opérateur pour recevoir un autre document.

Ainsi, dans l'une et l'autre de ces variantes, on mémorise dans le serveur une commande d'enchaînement de documents, soit en permanence (PRIEOP) soit après négociation (DC).

La figure 3 comporte un grand nombre d'étapes homologues de celles de la figure 2, qui ne seront donc pas décrites à nouveau.

Les étapes ci-dessus de la figure 3 portent le numéro de l'étape homologue de la figure 2 après accroissement de trois dizaines.

Après l'étape 69 d'établissement de la communication téléphonique, le serveur émet une phrase d'accueil à une étape 69A expliquant l'étape suivante 69B d'envoi d'une signalisation DTMF, que l'on désigne ici par "BA", et qui est une proposition d'enchaînement d'envoi de documents au cours de la communication. L'opérateur peut alors confirmer, à une étape 69C,par envoi en retour, depuis le poste ou le télécopieur, d'une signalisation DTMF, que l'on désigne par DC, et on enchaîne par l'envoi du menu vocal à l'étape 70.

Le serveur et le télécopieur savent qu'ils peuvent poursuivre en donnant à l'EOP le sens spécial d'écrit plus haut parce que l'un, le serveur, a émis BA et reçu DC, et l'autre, le télécopieur, a détecter en haute impédance BA (émis par le serveur) pris DC (émis par l'usager au moyen de poste). En variante, le télécopieur peut répondre lui-même DC en reprenant la ligne au poste en bref instant, ou en émettant en parallèle sur lui, ou en étant un téléphone-télécopieur intégré ; l'opérateur n'a alors pas besoin d'être mêlé à la négogiation : après une première phrase d'acceuil du serveur, l'opérateur entend un bref échange de tonalités qu'il ne comprend pas, puis le serveur poursuit ses explications.

A l'étape 76, le signal EOP de fin de document est émis par le serveur et acquitté, à l'étape 78, par le télécopieur par un signal MCF, qui est alors interprété par le serveur comme le signal PIP de l'étape 48. Il s'ensuit l'envoi à nouveau par le serveur du menu vocal, à l'étape 80, suivie des étapes déjà décrites.

On comprendra que le procédé de l'invention est indépendant du sens d'établissement de la communication téléphonique et que ce pourrait être le serveur qui appelle le télécopieur. De même, la signalisation DTMF de cet exemple peut être remplacée par tout type de signal pouvant être transmis par la liaison reliant le serveur au télécopieur et par exemple par des commandes vocales. Une signalisation binaire à travers un réseau numérique est aussi envisageable.

## Revendications

1. Procédé de gestion d'une communication entre un serveur de télécopie (1) et un télécopieur (2) associé à un poste téléphonique (3), reliés par une ligne téléphonique (11, 12), dans lequel le serveur, mis en communication avec le poste par un opérateur, présente un menu vocal de documents (40 ; 70), l'opérateur sélectionne (42 ; 72) l'un des documents au moyen du poste avant de commuter (43) la ligne sur le télécopieur et, en fin de document, le serveur émet un signal de fin de document (EOP ; PRIEOP), procédé caractérisé par le fait qu'on mémorise dans le serveur une commande (PRIEOP ; DC) d'enchaînement de documents, le télécopieur acquitte (48 ; 78) le signal de fin de document, quel que soit l'état du poste, et maintient établie la communication par raccordement de la ligne à une impédance de bouclage (31), afin de recevoir à nouveau un menu vocal (50 ;80).

2. Procédé de gestion selon la revendication 1, dans lequel, après l'acquittement (48) du signal de fin de document, on libère la ligne en l'absence de signaux de sélection de document pendant une durée déterminée (55S ; 55T).

3. Procédé de gestion selon l'une des revendications 1 et 2, dans lequel on effectue la sélection du document par une signalisation multifréquence (DTMF)

4. Procédé de gestion selon l'une des revendications 1 à 3, dans lequel le bouclage de ligne (49) est effectué sur un transducteur électro-acoustique (31).

5. Procédé de gestion selon l'une des revendications 1 à 4, dans lequel, après bouclage (49) de la ligne, on surveille l'état du poste pour boucler la ligne sur celui-ci lorsqu'il est décroché.

6. Procédé de gestion selon l'une des revendications 1 à 5, dans lequel la commande d'enchaînement de documents est fournie (69C) au serveur au moyen du poste ou du télécopieur en réponse à la réception d'une proposition d'enchaînement de documents (69B) émise par le serveur.

7. Procédé de gestion selon l'une des revendication 1 à 6, dans lequel le bouclage (49) de ligne est associé à une signalisation (47) d'invitation à décrocher le poste.

## Patentansprüche

1. Verfahren zur Verwaltung einer Kommunikation zwischen einem Telefaxserver (1) und einem mit einer Fernsprechstelle (3) angeschossenen Telefaxgerät (2), die durch eine Telefonleitung (11, 12) verbunden sind, wobei der durch einen Operator mit der Stelle zur Kommunikation gebrachte Server ein Sprachmenü aus Dokumenten präsentiert (40; 70), wobei der Operator eines der Dokumente mit Hilfe der Fernsprechstelle auswählt (42; 72), bevor er die Leitung auf das Telefaxgerät schaltet (43), und wobei der Server am Ende des Dokumentes ein Dokumentende-Signal (EOP; PRIEOP) sendet, wobei das Verfahren dadurch gekennzeichnet ist, daß in dem Server ein Befehl (PRIEOP; DC) der Verkettung von Dokumenten gespeichert wird, daß das Telefaxgerät unabhängig vom Zustand der Fernsprechstelle das Dokumentende-Signal quittiert (48; 78) und die Kommunikation durch Verbindung der Leitung mit einer Rückführimpedanz (31) aufrechthält, um erneut ein Sprachmenü zu empfangen (50; 80).

2. Verfahren zur Verwaltung nach Anspruch 1, wobei nach Quittierung (49) des Dokumentende-Signals bei Fehlen von Dokumentauswahlsignalen innerhalb einer vorgebenen Zeitdauer (55S; 55T) die Leitung freigegeben wird.

3. Verfahren zur Verwaltung nach einem der Anprüche 1 oder 2, wobei die Auswahl des Dokuments mit Hilfe eines Tonfrequenzwählsystems(DTMF) durchgeführt wird.

4. Verfahren zur Verwaltung nach einem der Ansprüche 1 bis 3, wobei die Rückführung der Leitung auf einem elektroakustischen Wandler (31) ausgeführt wird.

5. Verfahren zur Verwaltung nach einem der Ansprüche 1 bis 4, wobei nach Rückführung der Leitung (49) der Zustand der Fernsprechstelle überwacht wird, um die Leitung auf diese zurückzuführen, wenn diese abgenommen wird.

6. Verfahren zur Verwaltung nach einem der Ansprüche 1 bis 5, wobei der Befehl der Verkettung von Dokumenten dem Server mit Hilfe der Fernsprechstelle oder des Telefaxgeräts als Antwort auf den Empfang eines von dem Server gesendeten Vorschlags zur Verkettung von Dokumenten (69B) geliefert wird (69C).

7. Verfahren zur Verwaltung nach einem der Ansprüche 1 bis 6, wobei die Rückführung (49) der Leitung mit einer zum Abnehmen der Fernsprechstelle einladenen Meldung (47) verbunden ist.

## Claims

1. Method for managing communication between a facsimile document server (1) and a facsimile device (2) associated with a telephone (3), which are connected by a telephone line (11, 12), wherein the server, brought into communication with the telephone by an operator, has a document voice menu (40; 70), the operator selects (42; 72) one of the documents by means of the telephone before switching (43) the line to the facsimile device and, at the end of the document, the server emits an end-of-document signal (EOP PRIEOP), the method being characterised in that the server memorises a document link up command (PRIEOP ; DC), the facsimile device discharges (48, 78) the end-of-document signal no matter what the condition of the telephone and keeps open the communication by connection of the line to a loop impedance (31) in order once again to receive a voice menu (50; 80).

2. Managing method according to claim 1, wherein, after discharge (48) of the end-of-document signal, the line is freed in the absence of document selection signals for a specific period (55S; 55T).

3. Managing method according to one of claims 1 and 2, wherein the document is selected by multifrequency signalling (DTMF).

4. Managing method according to one of claims 1 to 3, wherein the looping of the line (49) is carried out on an electro-acoustic transducer (31).

5. Managing method according to one of claims 1 to 4, wherein, after the line is looped (49), the condition of the telephone is checked to loop the line thereto once it is hung up.

6. Managing method according to one of claims 1 to 5, wherein the document link up command is supplied (69C) to the server by means of the telephone or of the facsimile device in response to the reception of a document link up proposal (69B) emitted by the server.

7. Managing method according to one of claims 1 to 6, wherein the looping of the line (49) is associated with signalling (47) indicating that the telephone should be answered.
